# DEMANDE DE BREVET EUROPEEN

(11) **EP 1 228 684 A1**
(43) Date de publication de la demande: **07.08.2002**
(21) Numéro de dépôt: 02290215.9
(22) Date de dépôt: 30.01.2002
(51) Int. Cl.: A01G 9/10

(54) **Procédé et dispositif pour extraire sélectivement le terreau d'au moins une alvéole d'une plaque alvéolée utilisée notamment en culture horticole ou maraîchère**

(30) Priorité: 02.02.2001 FR 0101437
(71) Demandeur: Gerplant Automation, 76410 Tourville la Rivière (FR)
(72) Inventeur: Germaine, Michel, 76350 Oissel (FR)
(74) Mandataire: Casalonga, Axel

(57) **Abrégé**

Pour extraire sélectivement le terreau d'au moins une alvéole (2) d'une plaque alvéolée (1) de semis et d'élevage utilisée notamment en culture horticole ou maraîchère, on souffle un jet d'air (7) dans une alvéole sélectionnée (2), sur le dessus de la plaque (1) et depuis un côté de l'alvéole (2) de façon oblique vers le bas pour éjecter le terreau de l'alvéole (1) vers le haut et vers le côté opposé, à l'aide d'un moyen (3) pour supporter la plaque alvéolée (1) horizontalement, d'un moyen de soufflage (5) mobile en hauteur au-dessus du support, de moyens de translation verticale pour déplacer le moyen de soufflage en hauteur (flèche 6), de moyens de translation horizontale pour déplacer la plaque (1) sur le support (3) suivant la direction de ladite rangée d'alvéoles, et de moyens de commande pour commander sélectivement le fonctionnement des moyens de translation et du moyen de soufflage.

## Description

La présente invention se rapporte à un procédé pour extraire sélectivement le terreau d'au moins une alvéole d'une plaque alvéolée de semis et d'élevage utilisée notamment en culture horticole ou maraîchère, ainsi qu'à un dispositif pour la mise en oeuvre de ce procédé.

En culture horticole ou maraîchère, on produit à l'heure actuelle surtout des plants en motte en semant des graines une à une dans des alvéoles remplies de terreau de plaques alvéolées, les plants en motte, lorsqu'ils ont atteint une certaine taille, étant transplantés par exemple dans des godets constituant des alvéoles de plus grande taille.

Pour de multiples raisons, certaines graines ne germent pas ou donnent des plans chétifs. L'élevage des plants dans les plaques de semis et d'élevage ayant lieu dans des serres, sous atmosphère contrôlée, il est souhaitable pour des raisons de rendement et de qualité des plants, de procéder le plus tôt possible à un tri des plants dans les plaques et de procéder à un "reparage" des plaques, consistant à vider, sur une plaque, les alvéoles détectées comme ne contenant pas de plants ou alors des plants chétifs pour y mettre des plants de taille correcte prélevés sur une autre plaque.

On connaît à l'heure actuelle des "repareuses" qui effectuent ces opérations de tri et de "reparage", mais l'un des inconvénients de ces machines connus consiste dans le fait que pour vider une alvéole d'une plaque, il est nécessaire de manipuler cette plaque pour la placer dans une position inclinée afin de pouvoir éjecter le terreau de l'alvéole par soufflage d'un jet d'air depuis le dessous de la plaque dans ladite alvéole.

La présente invention vise précisément à simplifier l'extraction du terreau d'alvéoles sélectionnées d'une plaque alvéolée de telle manière que cette extraction n'implique pas de manipulation de la plaque, permettant ainsi une augmentation de la capacité de la repareuse.

L'invention vise par ailleurs un dispositif permettant d'extraire le terreau d'une ou de plusieurs alvéoles d'une plaque, sans manipulation de cette dernière, sous la commande de la caméra utilisée pour le tri des plants de ladite plaque.

Suivant le procédé conforme à l'invention pour extraire sélectivement le terreau d'au moins une alvéole d'une plaque alvéolée de semis et d'élevage utilisée notamment en culture horticole ou maraîchère, on souffle un jet d'air dans une alvéole sélectionnée de la plaque sur le dessus de la plaque, depuis un côté de l'alvéole de façon oblique vers le bas pour éjecter le terreau de l'alvéole vers le haut et vers le côté opposé de l'alvéole.

En vue d'une efficacité optimale d'éjection, on souffle le jet d'air de telle manière que ledit jet soit dévié vers le bas en touchant la paroi de l'alvéole.

Il s'est avéré que pour des plaques de semis et d'élevage usuelles comportant des alvéoles tronconique, il est avantageux de souffler le jet d'air sous un angle par rapport à l'horizontale compris entre 20 et 60°, notamment entre 25 et 45° et de préférence sous un angle de l'ordre de 30°. Toujours dans le but d'une efficacité optimale, il est avantageux de souffler le jet d'air sensiblement sur le milieu de la largeur de la paroi de l'alvéole.

Le dispositif pour la mise en oeuvre de ce procédé sur une plaque alvéolée comportant au moins une rangée d'alvéoles, lequel dispositif peut faire partie d'une "repareuse" comportant une caméra de tri des plants de la plaque, comprend un moyen de support pour supporter la plaque alvéolée dans un plan sensiblement horizontal. Il comprend, en outre, au moins un moyen de soufflage disposé mobile en hauteur au-dessus dudit moyen de support. Il comprend, par ailleurs, des moyens de translation verticale pour déplacer le moyen de soufflage en hauteur. Il comprend également des moyens de translation horizontale pour déplacer la plaque alvéolée sur le moyen de support par rapport au moyen de soufflage, suivant la direction de ladite rangée d'alvéoles. Il comprend, de plus, des moyens de commande pour commander sélectivement le fonctionnement desdits moyens de translation et dudit moyen de soufflage.

Grâce au fait que le moyen de support supporte la plaque alvéolée dans un plan sensiblement horizontal, le dispositif suivant l'invention peut être incorporé d'une manière très simple à une "repareuse" dans laquelle, de façon usuelle, les plaques alvéolées à reparer sont toujours manipulées en position horizontale, sur des transporteurs qui peuvent être, par exemple, des transporteurs à tapis, à chaîne ou autre.

Les plaques alvéolées utilisées en culture horticole ou maraîchère comprennent, d'une manière générale, plusieurs rangées d'alvéoles.

Suivant un mode de réalisation particulièrement simple du dispositif, ce dernier comprend un moyen de soufflage unique, des moyens de translation horizontale de ce moyen de soufflage perpendiculairement à la direction des rangées d'alvéoles de la plaque, et des moyens de commande desdits moyens de translation horizontale. Ainsi, on déplace le moyen de soufflage unique pour l'amener au-dessus d'une alvéole sélectionnée dont on veut extraire le terreau.

Suivant un autre mode de réalisation, le dispositif comprend plusieurs moyens de soufflage disposés côte à côte perpendiculairement à la direction des rangées d'alvéoles de la plaque, et des moyens de commande pour commander sélectivement le fonctionnement de chaque moyen de soufflage. Ainsi, on peut avantageusement disposer d'autant de moyens de soufflage disposés côte à côte que la plaque comporte de rangées d'alvéoles, ce qui permet d'abaisser simultanément tous les moyens de soufflage sur la plaque lorsqu'une alvéole sélectionnée se trouve sous les moyens de soufflage et de faire fonctionner uniquement le moyen de soufflage abaissé sur ladite alvéole sélectionnée pour extraire le terreau de cette alvéole, alors que les autres moyens de soufflage ne sont pas actionnés.

De préférence, le dispositif comprend, en outre, des moyens de récupération du terreau éjecté par le moyen de soufflage.

Ces moyens de récupération peuvent être constitués, dans le mode de réalisation avec un moyen de soufflage unique, par un réceptacle qui se déplace avec le moyen de soufflage unique. Dans le cas du mode de réalisation avec plusieurs moyens de soufflage disposés côte à côte, les moyens de récupération peuvent comprendre un moyen de récupération unique, par exemple un tapis transporteur qui s'étend au-dessus du moyen de support perpendiculairement à la direction des rangées d'alvéoles.

Dans un cas comme dans l'autre, le moyen de soufflage peut avantageusement comprendre une coiffe dont le bord inférieur est conformé pour s'adapter sur le dessus d'une alvéole et qui comporte d'un côté un ajutage de soufflage d'air et du côté opposé un guide d'éjection, l'ajutage étant orienté de façon oblique vers le bas sur le dessus de l'alvéole et le guide d'éjection étant orienté de façon oblique vers le haut depuis le dessus de l'alvéole en direction des moyens de récupération.

En se référant aux dessins schématiques annexés, on va décrire ci-après plus en détail un mode de réalisation illustratif et non limitatif de l'invention; sur les dessins :
- la figure 1 est une coupe schématique d'un moyen de soufflage disposé sur une alvéole d'une plaque alvéolée reposant sur un support horizontal, montrant le principe de fonctionnement de ce moyen de soufflage;
- la figure 2 représente, en vue de dessus, à échelle réduite, les principaux moyens d'un dispositif conforme à l'invention, conçu pour des plaques comportant plusieurs rangées d'alvéoles.

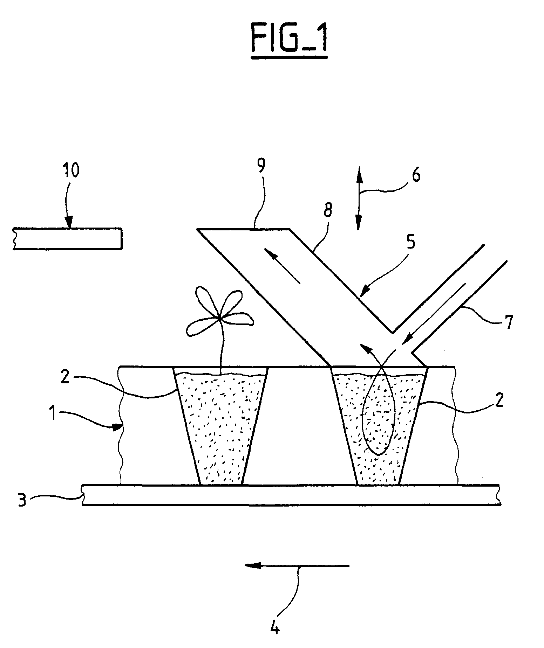

Selon la figure 1, une plaque alvéolée 1, telle qu'utilisée comme plaque de semis et d'élevage en culture horticole ou maraîchère, comprenant des alvéoles 2 de forme tronconique remplies de terreau, repose sur un support 3 horizontal. On reconnaît sur la figure 1 que la motte de terreau contenue dans une alvéole 2 porte un plant, tandis que la motte de terreau contenue dans une autre alvéole 2 ne porte pas de plant.

Pour extraire le terreau de l'alvéole 2 dépourvue de plant, on avance la plaque 1 sur le support 3, dans le sens de la flèche 4, de manière que le dessus (extrémité supérieure de grand diamètre) de l'alvéole 2 dépourvue de plant, se trouve à distance en dessous d'une coiffe 5 dont le bord inférieur présente une forme telle qu'il puisse s'adapter sur le dessus de ladite alvéole, c'est-à-dire prendre appui sur le dessus de la plaque 1, autour de l'alvéole 2 en question.

La coiffe 5 est mobile en translation verticale selon la flèche 6.

La coiffe 5 comporte d'un côté un ajutage de soufflage 7 orienté de façon oblique vers le bas sur le dessus de l'alvéole 2 sur lequel la coiffe 5 est adaptée et du côté opposé un guide d'éjection 8 orienté de façon oblique vers le haut depuis le dessus de l'alvéole 2.

L'ajutage 7 est destiné à être alimenté en air comprimé par un tuyau non représenté raccordé à l'ajutage 7, de manière à souffler, comme indiqué par des flèches, un jet d'air sur le dessus de l'alvéole 2, en direction de la paroi de l'alvéole 2, sous un angle tel que le jet d'air soit dévié vers le bas en direction du fond de l'alvéole 2 et remonte, en longeant la paroi opposée de l'alvéole 2, pour s'échapper par le guide d'éjection 8 en entraînant, à travers ce dernier, le terreau contenu dans l'alvéole 2, qui est éjecté par l'ouverture 9 à l'extrémité libre du guide 8 sur un moyen de récupération 10 disposé ici à distance au-dessus du support 3.

Il est à noter que l'ajutage 7 est incliné vers le bas de telle manière que le jet d'air rencontre la paroi de l'alvéole 2 sous un angle de moins de 90°, afin que le jet soit bien dévié vers le fond de l'alvéole 2. De préférence, le jet d'air sort de l'ajutage 7 sous un angle par rapport à l'horizontale (plan du support 3) compris entre 20 et 60°, selon la conicité de la paroi de l'alvéole 2.

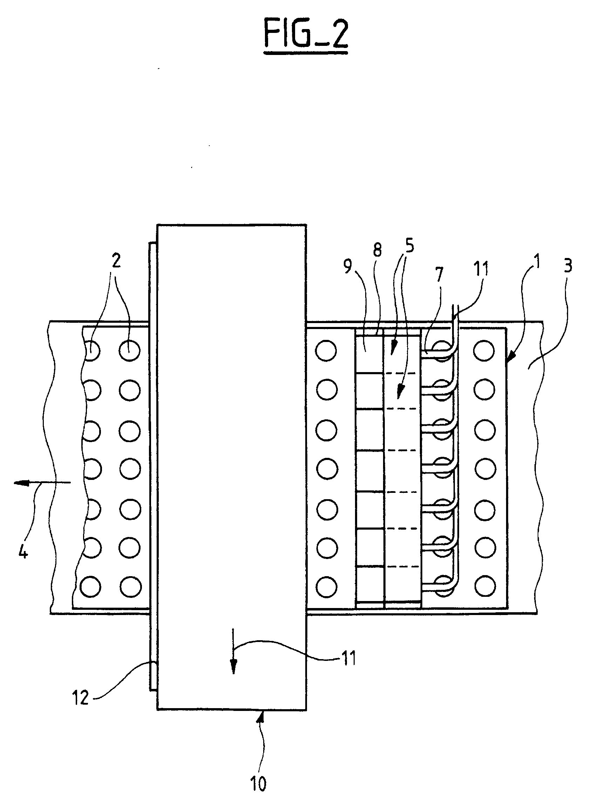

Sur la figure 2, on retrouve, à échelle réduite, la plaque alvéolée 1 reposant sur le support 3. Dans l'exemple illustré, la plaque alvéolée 1 présente, perpendiculairement à la direction de translation 4, sept rangées d'alvéoles 2. Le moyen de soufflage comprend ici sept coiffes 5 solidaires les unes des autres, disposées côte à côte perpendiculairement à la direction de translation 4, au-dessus du support 3, chaque coiffe 5 comportant un ajutage de soufflage 7 et un guide d'éjection 8 débouchant en 9.

L'ajutage 7 de chaque coiffe 5 est relié par un tuyau 11, par l'intermédiaire d'une valve commandée, à une source d'air comprimé.

Ainsi, lorsqu'une caméra disposée en amont sur le trajet du support 3 a détecté l'absence d'un plant ou un plant chétif dans au moins une alvéole d'une rangée transversale d'alvéoles 2 de la plaque 1, on abaisse les coiffes 5 sur toutes les alvéoles de la rangée d'alvéoles en question et on alimente l'ajutage 7 de la coiffe 5 sélectionnée pour éjecter sélectivement le terreau de l'alvéole en question, sans affecter les autres alvéoles de la même rangée.

On reconnaît par ailleurs sur la figure 2 que le moyen de récupération 10 du terreau éjecté des alvéoles de la plaque 1 est ici constitué par un tapis transporteur disposé transversalement au support 3 constitué par un chemin de transport, le tapis 10 se déplaçant dans le sens de la flèche 11 pour verser le terreau récupéré dans un réceptacle non représenté. Pour empêcher toute éjection de terreau au-delà du tapis de récupération 10, ce dernier est flanqué d'une paroi 12 formant écran.

Au lieu d'utiliser, comme dans l'exemple illustré par la figure 2, plusieurs moyens de soufflage (coiffes 5) disposés côte à côte et mobiles verticalement (flèche 6 sur la figure 1) conjointement, il serait également possible d'utiliser un unique moyen de soufflage (coiffe 5) mobile en translation, non seulement en hauteur (flèche 6), mais également horizontalement, transversalement à la direction d'avancement (flèche 4) de la plaque 1, cet unique moyen de soufflage pouvant ainsi, sous la commande de la caméra montée en amont, être amené sélectivement sur l'alvéole 2 détectée par la caméra comme ne contenant pas de plant ou contenant un plant chétif, pour extraire de cette alvéole le terreau et, le cas échéant, le plant chétif, avant reparage de la plaque pour transplantation, dans cette alvéole, d'un plant en motte prélevé par exemple dans une autre plaque.

## Revendications

1. Procédé pour extraire sélectivement le terreau d'au moins une alvéole d'une plaque alvéolée de semis et d'élevage utilisée notamment en culture horticole ou maraîchère, **caractérisé par le fait qu'**on souffle un jet d'air dans une alvéole sélectionnée, sur le dessus de la plaque et depuis un côté de l'alvéole de façon oblique vers le bas pour éjecter le terreau de l'alvéole vers le haut et vers le côté opposé de l'alvéole.

2. Procédé suivant la revendication 1, **caractérisé par le fait qu'**on souffle le jet d'air de telle manière que ledit jet soit dévié vers le bas par la paroi de l'alvéole.

3. Procédé suivant la revendication 2, **caractérisé par le fait qu'**on souffle le jet d'air sous un angle par rapport à l'horizontale compris entre 20 et 60° et notamment entre 25 et 45°.

4. Procédé suivant la revendication 3, **caractérisé par le fait qu'**on souffle le jet d'air sous un angle par rapport à l'horizontale de l'ordre de 30°.

5. Procédé suivant l'une quelconque des revendications précédentes, **caractérisé par le fait qu'**on souffle le jet d'air sensiblement sur le milieu de la largeur de la paroi de l'alvéole.

6. Dispositif pour la mise en oeuvre du procédé suivant l'une quelconque des revendications précédentes, sur une plaque alvéolée (1) comportant au moins une rangée d'alvéoles (2), **caractérisé par le fait qu'**il comprend:
- un moyen de support (3) pour supporter la plaque alvéolée dans un plan sensiblement horizontal,
- au moins un moyen de soufflage (5) disposé mobile en hauteur au-dessus dudit moyen de support,
- des moyens de translation verticale pour déplacer le moyen de soufflage en hauteur (flèche 6),
- des moyens de translation horizontale pour déplacer la plaque (1) sur le moyen de support (3) par rapport au moyen de soufflage (5) suivant la direction de ladite rangée d'alvéoles (flèche 4), et
- des moyens de commande pour commander sélectivement le fonctionnement desdits moyens de translation et dudit moyen de soufflage.

7. Dispositif suivant la revendication 6 pour des plaques comportant plusieurs rangées d'alvéoles, **caractérisé par le fait qu'**il comprend un moyen de soufflage unique, des moyens de translation horizontale du moyen de soufflage perpendiculairement à la direction des rangées d'alvéoles de la plaque, et des moyens de commande desdits moyens de translation horizontale.

8. Dispositif suivant la revendication 6 pour des plaques comportant plusieurs rangées d'alvéoles, **caractérisé par le fait qu'**il comprend plusieurs moyens de soufflage disposés côte à côte perpendiculairement à la direction des rangées d'alvéoles de la plaque et des moyens de commande pour commander sélectivement le fonctionnement de chaque moyen de soufflage.

9. Dispositif suivant l'une quelconque des revendication 6 à 8, **caractérisé par le fait qu'**il comprend, en outre, des moyens (10) de récupération du terreau éjecté par le moyen de soufflage.

10. Dispositif suivant la revendication 9, **caractérisé par le fait que** le moyen de soufflage comprend une coiffe (5) dont le bord inférieur est conformé pour pouvoir s'adapter sur le dessus d'une alvéole et qui comporte d'un côté un ajutage de soufflage d'air (7) et du côté opposé un guide d'éjection (8), l'ajutage étant orienté de façon oblique vers le bas sur le dessus de l'alvéole et le guide d'éjection étant orienté de façon oblique vers le haut depuis le dessus de l'alvéole en direction des moyens de récupération (10).
